# EUROPEAN PATENT APPLICATION

(11) **EP 1 443 764 A2**
(43) Date of publication of application: **04.08.2004**
(21) Application number: 03300184.3
(22) Date of filing: 30.10.2003
(51) Int. Cl.: H04N 7/173

(54) **Ratings based television guide**

(30) Priority: 30.10.2002 US 283525
(71) Applicant: Imagictv Inc., Saint John, New Brunswick E2L 3Y2 (CA)
(72) Inventor: Petrovic, Aleksandar, Saint John New Brunswick E2J 4C4 (CA); Grondin, Gregory Gilles, Saint John New Brunswick E2L 1L6 (CA); Parnis, Gerald Anthony, Victoria, BC V8X 5G5 (GB); Stuart, Anthony M.L. Alcatel Canada Inc., Saint John New Brunswick E2L 1G1 (CA); Parker, Alistar John, Quispamsis New Brunswick E2E 4H9 (CA); Cameron, Allan B., Saint John New Brunswick E2M 5P6 (CA)
(74) Representative: Lenne, Laurence

(57) **Abstract**

Systems, methods and devices related to program viewing guides for multimedia presentation such as television programs. A centralized server gathers data related to end user viewing preferences by polling end user devices on what multimedia presentation is currently being accessed. This data is then processed and collated by the centralized server such that each multimedia presentation currently available to the end user devices is given a rating based on its popularity with the end users. The data can then be accessed by each end user device by requesting such multimedia presentation specific data from the server. Once the server has send this data, it can then be presented to the end user by way of a user interface that not only gives the relevant data regarding the multimedia presentation such as its rating and where it is being broadcast, but also provides the end user with a view of the multimedia presentation as currently being shown.

## Description

The present invention relates to devices for accessing multimedia entertainment and is specifically applicable, but not limited to, program viewing guides for television channels.

The concept of the television is at least 70 years old and along with its development arose the accoutrements and accessories designed to enhance and assist the television viewing experience. The development of high-speed broadband access to the Internet and its practically infinite amount of content has placed pressure on the television to compete with such diverse sources and types of information. One side effect of such competition is the explosion in the number of specialty channels available to the end user. This has given rise to an ever increasing number of new television programs being pumped out by not only the traditional television networks but also by the specialty or "cable" channels as well. On any given moment, an end user with access to the ever expanding universe of television channels may be confronted with as many as, in some cases, 500 television channels. The end user of today is confronted with the exact opposite of the dilemma facing the TV viewer of the 1950's - instead of not having any choice, today's end user has too many choices.

One tried and true method which has previously helped the end user in deciding how to spend his or her ever more precious television viewing time is the traditional printed television guide. The end user consults this to find what is playing and when. To assist in the decision making process, these printed guides give synopses of not only movies but also of situation comedies and other television programs.

The printed television guide has, in recent years, made the leap into the television. "Online" guides, which can give details of programs days before the programs are aired, can now be accessed by end users using set top boxes (STBs) through which other services and options may be accessed. However, such online guides still do not provide the end user with one critical piece of information - what are other people watching?

The venerable Nielsen organization has, since the 1950's provided the world with a benchmark of what the TV viewing public (especially the North American viewing public) is watching on any given night. However, their results are not released until days , if not weeks after the time the data is collected and they only constitute a percentage of the population. Furthermore, their results are not generally available to the viewing public. Also, the Nielsen ratings and similar ratings tend to be focussed on specific markets. To a British end user, the Nielsen ratings may therefore be useless as the programs covered may not be available in the British market. An undecided end user sitting at home on a Wednesday night therefore cannot take advantage of the accumulated wisdom of the wider populace in his general vicinity to determine what is and what is not a good program to watch that evening.

Based on the above, there is therefore a need for an aid to television users in determining what other viewers are watching. Such a solution would provide reasonably timely results and should be easy to use and its results should be easy to interpret. Ideally as well, such a solution should be flexible enough so that the results are meaningful to the end user. Also, it would be ideal if such results could be made available to the end user in real time.

It is therefore an object of the present invention to provide alternatives to the prior art that at least mitigate if not overcome the drawbacks of the prior art.

It should be noted that the term data transmission unit (DTU) will be used in a generic sense throughout this document to mean units through which digital data is transmitted from one point in a network to another. Thus, such units may take the form of packets, cells, frames, or any other unit as long as digital data is encapsulated within the unit. Thus, the term DTU is applicable to any and all packets, cells, frames, cr any other units that implement specific protocols, standards or transmission schemes. It should also be noted that the term digital data will be used throughout this document to encompass all manner of voice, multimedia content, video, binary data or any other form of data or information that has been digitized and that is transmitted from one point in a network to another.

The present invention seeks to meet the above need by providing systems, methods and devices related to program viewing guides for multimedia presentations such as television programs.

One object of the present invention is to provide a method of gathering data associated with end user multimedia viewing preferences that allows a quick real time guide to the end user and targeted advertising that may be presented to viewers viewing specific programs.

More precisely, the present invention provides a method of gathering data associated with end user multimedia viewing preferences, the method comprising the steps of:
a) transmitting query DTUs to a group of end user devices, each query DTU requesting viewing data related to a multimedia presentation currently being accessed by each one of said end user devices;
b) receiving response DTUs from said group of end user devices, each of said response DTUs containing said viewing data; and
c) organizing received viewing data such that each multimedia presentation currently active is assigned an indication relating to a popularity of said multimedia presentation,
said popularity being determ ined by using said viewing data.

Thus, a centralized server gathers data related to end user viewing preferences by receiving data from end user devices on what multimedia presentation is currently being accessed. This data is then processed and collated by the centralized server such that each multimedia presentation currently available to the end user devices is given a rating based on its popularity with the end users. The data can then be accessed by each end user device by requesting such multimedia presentation specific data from the server. Once the server has sent this data, it can then be presented to the end user by way of a user interface that not only gives the relevant data regarding the multimedia presentation such as its rating and where it is being broadcast, but also provides the end user with a view of the multimedia presentation as currently being shown. The ratings therefore provide a quick real time guide to the end user as to which multimedia presentation is the most popular and, possibly, the most interesting. End users no longer need to sift through pages (whether online or on printed medium) of stale listings to find programs to view. Another possible advantage is that targeted advertising may be presented to viewers viewing specific programs. Also, the data gathered by the servers may be used to detect the piracy of online video feeds.

In a second aspect the present invention provides a method for retrieving data relating to a specific multimedia presentation from an online source, the method comprising:
a) transmitting a request DTU from an end user device to said online source, the request DTU requesting data relating to a specific multimedia presentation identified in said request DTU;
b) receiving a rating DTU from said online source, said rating DTU containing an indication relating to a popularity of said specific multimedia presentation; and
c) presenting said indication to an end user.

In a third aspect the present invention provides a method of providing end user multimedia viewing preferences to an online server from an end user device, the method comprising:
a) receiving a query DTU from said online server, said query DTU requesting viewing data related to a multimedia presentation currently being accessed by said end user device; and
b) transmitting a response DTU to said online server from said end user device, said response DTU containing data related to said multimedia presentation.

In a fourth aspect the present invention provides a computer server for use in gathering data associated with end user multimedia viewing preferences, the server comprising:
- network connection means for connecting said server to a network;
- communication means for communicating with at least one end user device through said network connections means; and
- data collection means for receiving and processing data transmission units (DTUs) from said at least one end user device, said DTUs containing data related to a multimedia presentation being accessed by the or each of said at least one end user device.

In a fifth aspect the present invention provides a user interface for use with an end user device which accesses multimedia presentations, the interface comprising:
- ratings indicia for presenting an indication of popularity of a specific multimedia presentation; and
- identification indicia for identifying said specific multimedia presentation.

In a sixth aspect the present invention provides an end user device for accessing multimedia presentations, the device comprising:
- request means for transmitting a request DTU to an online source, said request data transmission unit (DTU) requesting data related to at least one active multimedia presentation;
- reception means for receiving a ratings DTU from said online source, said rating DTU containing said data related to at least one active multimedia presentation; and
- presentation means for presenting said data to an end user.

In a seventh aspect the present invention provides computer readable media having encoded thereon computer readable code implementing a method of gathering data associated with end user multimedia viewing preferences, the method comprising the steps of:
a) transmitting query DTUs to a group of end user devices, each query DTU requesting viewing data related to a multimedia presentation currently being accessed by each one of said end user devices;
b) receiving response DTUs from said group of end user devices, each of said response DTUs containing said viewing data; and
c) organizing received viewing data such that each multimedia presentation currently active is assigned an indication relating to a popularity of said multimedia presentation,
   said popularity being determined by using said viewing data.

In an eighth aspect the present invention provides computer readable media having encoded thereon computer readable code implementing a method for retrieving data relating to a specific multimedia presentation from an online source, the method comprising:
a) transmitting a request DTU from an end user device to said online source, the request DTU requesting data relating to a specific multimedia presentation identified in said request DTU;
b) receiving a rating DTU from said online source, said rating DTU containing an indication relating to a popularity of said specific multimedia presentation; and
c) presenting said indication to and end user.

In a ninth aspect the present invention provides computer readable media having encoded thereon computer readable code implementing a method of providing end user multimedia viewing preferences to an online server from an end user device, the method comprising:
a) receiving a query DTU from said online server, said query DTU requesting viewing data related to a multimedia presentation currently being accessed by said end user device; and
b) transmitting a response DTU to said online server from said end user device, said response DTU containing data related to said multimedia presentation.

A better understanding of the invention will be obtained by considering the detailed description below, with reference to the following drawings in which:
Figure 1 is a block diagram of a system for gathering and distributing viewer preference data according to one aspect of the invention;
Figure 2 is a block diagram of a server for use with the system of Figure 1;
Figure 3 is a block diagram of an end user device for use with the system of Figure 1;
Figure 4 is an example of a user interface which may be used by the system of Figure 1 to facilitate the delivery of ratings data to an end user;
Figure 5 is an alternative user interface to the user interface of Figure 4;
Figure 6 is an alternative user interface which allows the end user to view not only the ratings for multiple programs but also to view the programs themselves simultaneously;
Figure 7 is a flowchart detailing the steps executed by a server when gathering viewer preference data from multiple end user devices;
Figure 8 is a flowchart detailing the steps executed by an end user device when gathering and transmitting viewer preference data to a server; and
Fig 9 is a flowchart detailing the steps executed by a server when servicing a request for program information from an end user device.

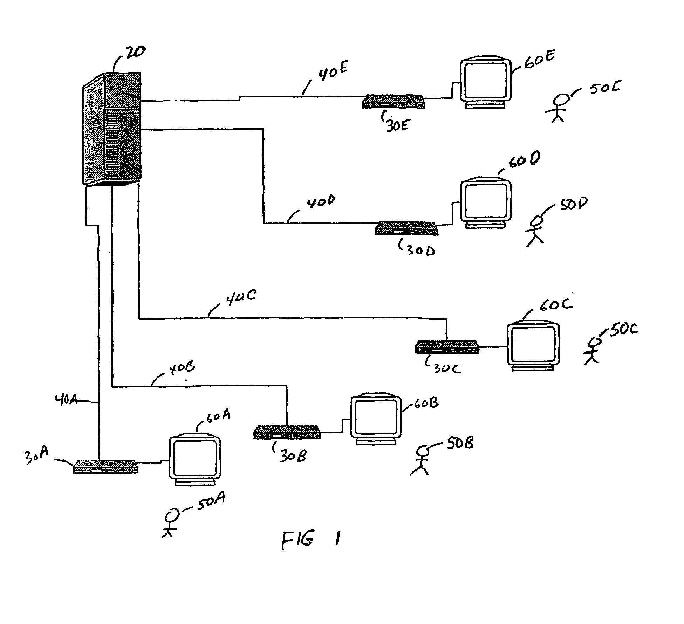

Referring to Figure 1, a system 10 for gathering and distributing end user viewing preference data is illustrated. A central server 20 communicates with end user devices 30A, 30B, 30C, 30D, 30E, by way of network links 40A, 40B, 40C, 40D, 40E. It should be noted that end user devices 30A- 30E are used by end users 50A, 50B, 50C, 50D, 50E respectively to access multimedia presentations through video display units (VDU) 60A, 60B, 60C, 60D, 60E.

When an end user 50A accesses a specific multimedia presentation (such as a television program) by way of the end user device 30A the end user device 30A is aware of which multimedia presentation is being accessed. This information, and any other data related to it, can then be requested by the server 20 as it polls the end user devices 30A-30E. This information is then received by the server 20 from the end user devices as they respond to the poll or request from the server 20. The server 20 can then process these responses so that each multimedia presentation available to the end user devices at the time the poll was taken is given a "ranking" or a rating based on how many of the responding end user devices were tuned to or were accessing that particular multimedia presentation. Once the ranking or rating for a specific multimedia presentation is created, it can be updated by the server 20 using data from future poll responses from the end user devices.

To assist end users in determining which multimedia presentation (or "program") is worth accessing, the end user device can request a specific program's ranking or rating from he server 20. Once the server 20 sends this data relating to a specific program, the data can be presented to the end user by way of the VDU. Then, based on the presented data, the end user can determine if the requested program is worth accessing.

It should be noted that the server 20 need not poll all of the available end user devices. A subset of the available end user devices may be polled and results received can then be extrapolated to cover the number of available end user devices.

To further explain the process, the server 20 initially transmits a query data transmission unit (DTU) to at least one of the available end user devices. It should be clear that not all end user devices may be available to the server 20 at all times - the device may be turned off or the end user may have disabled a feedback feature that allows the end user device to report its settings to the server 20. Once the end user device receives a query DTU, the end user device checks what program is currently being accessed or viewed and a response DTU is then prepared. The response DTU will contain, at the minimum, an identifier which identifies the program being accessed. The response DTU is then transmitted by the end user device to the server 20.
As noted above, the server 20 receives these response DTUs from the end user devices. A profile for each program currently available to the end user devices is then created and stored by the server 20. The profile for a program will contain, at the minimum, the ranking of the program relative to the other programs within the same time slot. This ranking may take the form of some indicia other than a number and may be in the form of a "share" or percentage of the responding end user devices which are currently accessing that specific program.

The above described profile created by and now stored in the server 20, may then be updated as required. These profiles may also be retrieved by the end user devices if the end user desires to know how many others are accessing the same program. This is accomplished by an end user device formulating and transmitting a request DTU to the server 20. The request DTU will, at the minimum, contain identifying indicia which identifies the programs for which information is desired and the return network address of the end user device. Once the request DTU is received by the server 20, a rating DTU is then transmitted by the server 20 to the requesting end user device. Once the request DTU is received by the server 20, a rating DTU is then transmitted by the server 20 to the requesting end user device. The rating DTU will contain the ranking of the requested program or, for an expanded implementation, the whole program profile. The data in the rating DTU is then received by the end user device. Of course, to receive the latest ranking, the end user device will need to re-request a rating DTU for the same program at a later point in time to receive the ranking for the program after a re-poll of the end user devices by the server 20.

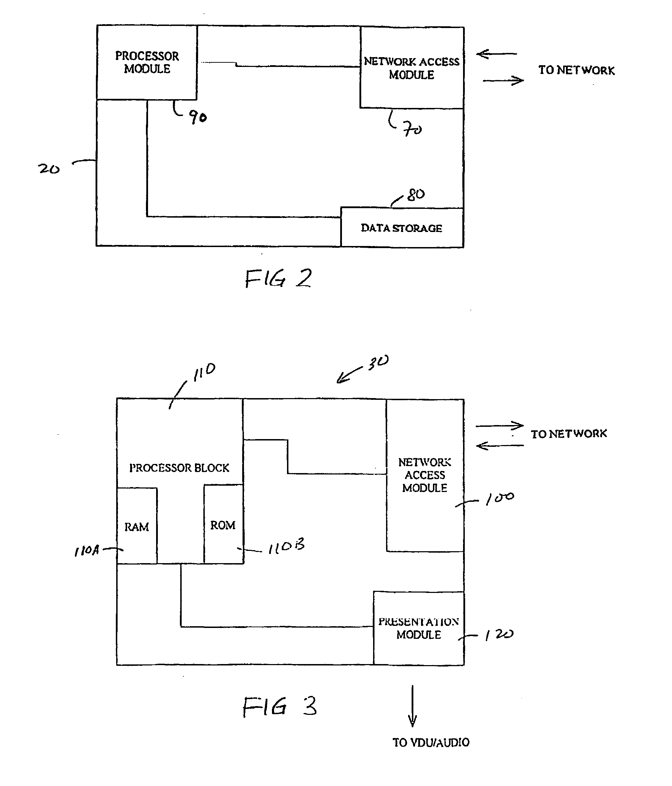

Referring to Figure 2, the server 20 may be configured as illustrated. The server 20 has a network access module 70, a data storage module 80, and a processor module 90. The server 20 may be a regular server equipped with specific programming to perform the required tasks. Specifically, the server 20:
a) queries the end user devices for the end user viewing preferences;
b) receives responses from the end user devices responsive to the server's queries;
c) organizes the data contained in the responses; and
d) responds to requests from user devices for data relating to specific programs.

Of the components illustrated in Figure 2, the data storage 80 stores the responses received from the end user devices and any profiles or rankings already generated for specific programs. As noted above, these rankings can be continually updated by the server 20. The network access module 70 provides the physical interface between the network connection and the server 20. The processor module 90 receives the response DTUs from the network access module and processes these response DTUs to create the profiles for each program.

The processing required for each of the response DTUs depends on the amount of information contained in the response DTUs. While the amount of information in each response DTU is dependant on the implementation, the bare minimum is, as described above, the identifying indicia which identifies the program which an end user device is accessing. The processing may therefore be as simple as incrementing a counter specific to a program every time a response DTU identifying that program is encountered. To determine a "market share" or ranking of a program, the number of response DTUs identifying that program may be divided by the total aggregate number of response DTUs received for a specific polling time sequence. As an example, if 500 response DTUs out of 2000 response DTUs received indicate program A, then program A has a 25% share of the viewing audience for that particular polling period. The results must be specific to a specific polling period as the dynamic character of end user fickleness necessarily renders the results to only be useful for that polling period. Returning to the example, if a polling period is a 15 minute window during which response DTUs are to be received and counted by the server, the next polling period may show that program A's share has decreased to 20% (400 response DTUs as opposed to the original 500 response DTUs). The polling period may be measured from the point in time when the server 20 transmits its last query DTU to an end user device. Thus, if the server 20 transmits query DTUs from 8:05 PM to 8:10 PM, then the 15 minute polling period ends at 8:25 PM. Any response DTUs received after this time period may be ignored by the server 20. It should be clear that the polling period may be configurable at the server level by a user controlling the server. This polling period may be adjusted to account for changing network conditions such as congestion

For the query DTUs, the server 20 may implement a generic query DTU that, when received by an end user device, triggers an automatic response including the creation and transmission of a response DTU. A list of network addresses of all end user devices may be kept by the server and, when transmitting query DTUs, a random selection of end user device addresses may be selected. Conversely, all end user device addresses may be polled by sending a query DTU to each address. Clearly, however, this may lead to network congestion f not longer response times. It may therefore be preferable to merely query a subset of the available end user device addresses.

To respond to request DTUs from end user devices, an automatic response system geared toward fast response times may be implemented through the server. Upon receipt of a request DTU, the processor module extracts the identifying indicia from the response DTU and corelates this with a database of current program profiles available at the data storage 80. Once the relevant profile has been retrieved from the data storage 80, the return network address is extracted from the request DTU. A ratings DTU is then formulated using the retrieved profile as the payload and the return network address of the requesting end user device as the destination. This ratings DTU is then transmitted by the network access module to the relevant destination end user device.

It should be noted that, to assist in identifying specific programs, an identifying indicia or program identifying information is used in the explanation above. This concept may also be used to avoid problems which may result if the multimedia presentations are television programs. Often, multiple television channels representing different networks broadcast the same television show at the same time. Thus, at the 8:30 PM time slot channel x, y, z may all be showing program A. To prevent the impact of DTUs identifying program A from being lessened by being divided between three channels, a single identifying program identification information may be used. This single program identification information is assigned to a program regardless of the network, channel, or source of the program. Thus, if program A is identified by the program identifier 1A x 1A, then any response DTUs containing that identifier will cause the counter for program A to be incremented.

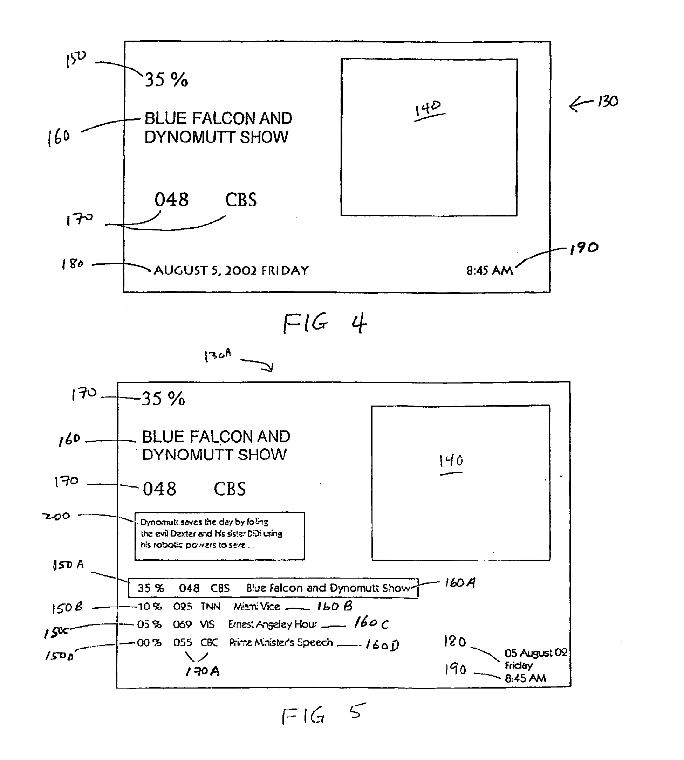

Referring to Figure 3, a block diagram of the components of an end user device 30 which may be used with the different aspects of the invention is illustrated. As can be seen, the end user device 30 has a network access module 100, a processor block 110, and a presentation module 120. The network access module 100 is similar to the network access module 70 in the server 20 in that it receives and sends data to and from the network. Thus, any feeds which can constitute the multimedia presentations or programs are received by the network access module along with any DTUs from the server 20. The processor block 110 has two sub-blocks - a random access memory (RAM) block and a read-only memory (ROM) block 110B. The RAM block 110A is used by the processor block 110 when performing such functions as decoding the digital streams and digital data received by the end user device 30 by way of the network access module 100. The ROM block 110B contains the software required by the processor block 110 to execute its functions. The presentation module 120 presents the decoded digital data from the processor block 110 to the analog medium required by a video display (VDU) or by an audio end user device. Furthermore, the presentation module 120 provides any interface which may be required by the digital data prior to its presentation to an end user.

In terms of function, the processor block 110 decodes the data and DTUs received by the network access module 100. The processor block 110 also creates any DTUs which may need to be sent to a network destination. As such, if the end user device 30 receives a query DTU from the server 20, the processor block 110 will respond by determining which program is currently being accessed. This is done by examining the content of the data stream being received by the network access module and being presented to the presentation module. Since each data stream (containing the digital data of the multimedia presentation) has embedded within it identifying data which identifies not only the source of the data stream (e.g. the television station being tuned into) but also the content (e.g. the title of the program), the processor block 110 can retrieve this data for encapsulation in a response DTU. Once the response DTU is formulated, it can then be transmitted to the server 20 by way of the network access module 100.

For request DTUs, a process similar to that explained above is executed. An end user indicates to the end user device 30 a desire to view a ranking/rating for a specific program. Once the processor block 110 has determined the identity of the desired program. Once the processor block 110 has determined the identity of the desired program from the end user input, the processor block 110 inserts the program identification information and the returns network address in a request DTU. This request DTU is then transmitted to the server 20. Once a rating DTU is received in response to the request DTU, the data contained in the rating DTU is decoded by the processor block 110. A suitable user interface is then used by the presentation module to present this rating data to the end user.

Referring to Figure 4, a diagram of a sample user interface (UI) 130 is illustrated. As can be seen, the UI 130 has a panel 140 where the program being showcased can be viewed. A rating 150 indicates a percentage of polled and responding end user devices that are currently also viewing the same program. A title field 160 details the title of the program while a station field 170 details not only the station but also the channel number occupied by the program. Date field 180 and time field 190 detail the current date and time for the end user's convenience.

The UI 130 in Figure 4 provides the desired fields to give the end user enough information regarding the program being accessed. As noted above, the rating of the program, along with its title, may be extracted from a rating DTU received from a server 20. The channel and station may, however, be extracted by the end user device from the data stream being received that contains the digital audio and video which comprise the program. Similarly, the date and time fields may be extracted from periodic synchronization DTUs from a central server. It should be noted, however, that the configuration of the UI 130 in Figure 4 is not the only possible configuration. Other configurations may be used as long as the relevant data are presented to the end user.

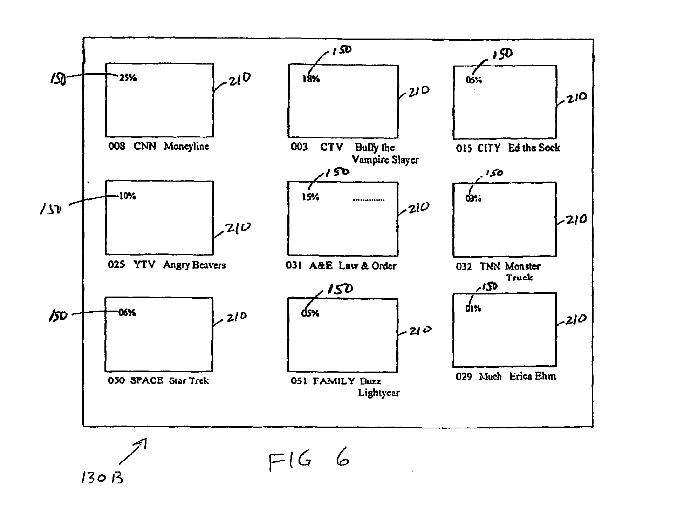

Referring to Figure 5, an alternative user interface is illustrated. As can be see, the elements in Figure 5 are similar to those in Figure 4 with the exception that more ratings are presented in the user interface 130A of Figure 5 than in the user interface 130 of Figure 4. Furthermore, a synopsis field 200 is included. The synopsis field 200 provides a short description of a highlighted program currently showing in the panel 140. This same highlighted program is set apart from the other stations and programs rated in the UI 130A by means of a box. The other stations and their programs are rated by ratings 150A-150D while their program titles are presented in fields 160A-160D. Their stations and station identification or network identifications are shown in field 170A. The date and time fields are still provided in fields 180, 190.

To implement the UI 130A presented in Figure 4, when a program is highlighted by an end user for a ratings check, the ratings DTU from the server will contain not only the rating for that program but also the synopsis or summary of the program. For the ratings of the other programs not highlighted but presented in the UI 130A, the end user device can send multiple request DTUs to the server and cache the ratings DTUs for these programs for future use. Thus, if the end user wishes to view the ratings for a program on channel 015, the end user device can issue request DTUs for programs on channels 010 to 020 and cache the results. Thus, and end user device can present the details for multiple different channels without issuing any further request DTUs to the user interface.

A further alternative to the user interface 130A of Figure 5 is the user interface 130B of Figure 6. The UI 130B of Figure 6 consists of multiple panels 210 with each panel providing an end user with a view of a separate program currently available. Also, each panel is overlaid with a rating 150 for the program being shown in the panel. At the bottom of each panel are identifying indicia which identifies the station/network being shown, the program currently being broadcast on that station/network and the channel setting. This UI 130B can be implemented as a separate data feed from a server. The multiplexing of the different video feeds from the different channels is done by the server. This can be done by having multiple tuners or end user devices, each outputting a single video feed, send their outputs to the multiplexing server. The multiplexing server then aggregates the different video feeds into a composite and sends this composite (with multiple video panels) as a single video/data feed to the destination end user device. The destination end user device can then receive the composite video feed and present it to the end user as a separate channel.

It should be noted that the user interface panelling, text and interactivity functions can be implemented using HTML (Hyper Text Markup Language) programming with the video panel (panel 140 in Figures 4 and 5) as a separate entity in the resulting HTML page. Other programming languages and/or interfaces may be used to provide the user interface panelling, text, and interactivity functions. Well known languages such as C or C++ may be used as well as the different incarnations of Flash technology, XML, HT ML, and any other suitable programs.

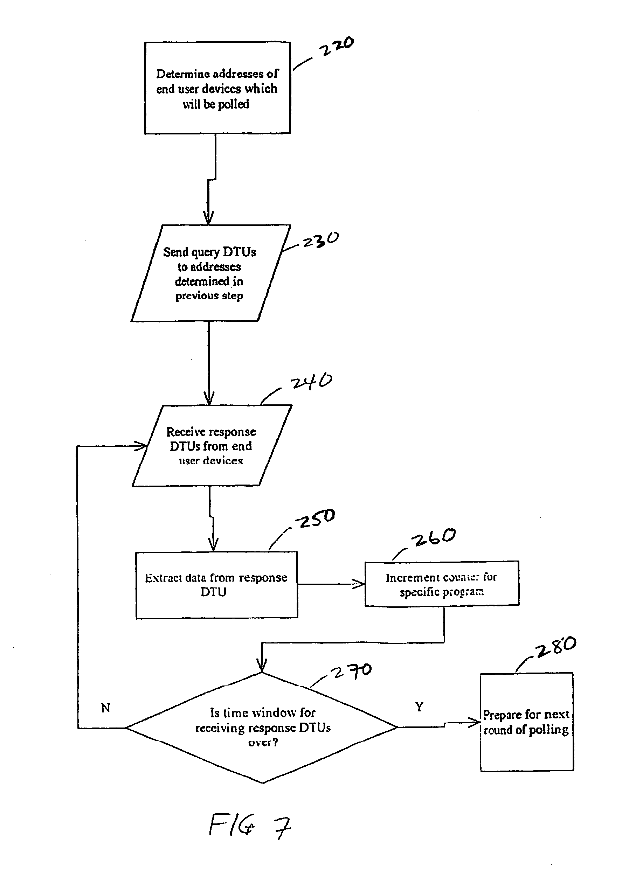

Referring to Figure 7, 8 and 9, flowcharts are provided for ease of understanding of the different processes implemented by the invention and explained above.

Figure 7 illustrates a flowchart for the steps executed by a server 20 when polling the end user devices. Starting at step 220, the server first determines the network addresses of the end user devices to be polled. This may, as noted above, take the form of a subset of all the available end user devices on the network. A random sampling of the end user devices on the network would provide a suitable indication of the preferences of the end users. Once the destination addresses are found, the query DTUs which should trigger response DTUs from the end user devices are then transmitted (step 230). With the query DTUs sent, the end user devices receiving then will respond. Step 240 is therefore that of receiving a specific response DTU. In step 250, the server extracts the data from the response DTU received and, depending on the identification of the program devoted by the data, the relevant counter is then incremented (step 260). As noted above, each program is assigned a counter so that the number of end user devices accessing that program may be tracked. Also as noted above, a time window for receiving response DTUs may be implemented to prevent confusion and erroneous counts due to late arriving response DTUs. In decision 270, this time window is checked to determine if more response DTUs are to be accepted. If the time window has note closed, then the logic returns to step 240 for the reception of more response DTUs. On the other hand, if the time window has closed, then step 280 is that of preparing for the next polling sequence. This may involve rejecting incoming response DTUs or waiting for a set amount of time until the response DTUs from the previous polling cycle have either arrived or been rejected.

It should be noted that while the steps illustrated in Figure 7 are sequential, they may be parallelized to assist in increasing processing speed. As such, instead of receiving one response DTU, the server may receive multiple response DTUs at the same time and process these individually but in parallel. Furthermore, if the response DTUs are to be received in sequence, these may be cached for later processing in a manner akin to pipelined processing.

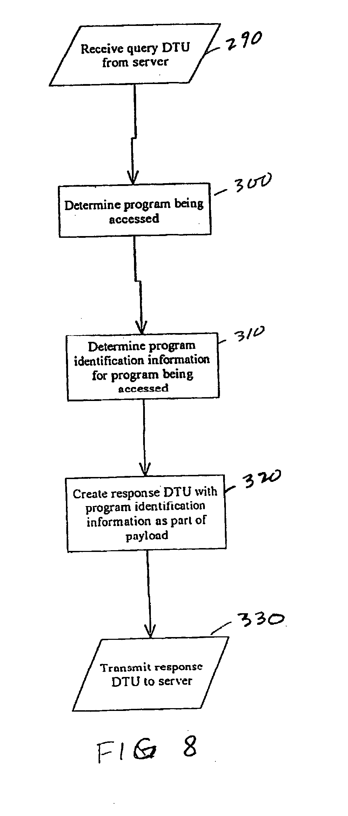

Figure 8, on the other hand, details the steps taken by an end user device once it has received a query DTU from a server. The process begins with the reception of a query DTU from a server (step 290). This reception, once it has been determined to a query DTU, triggers a sequence of events and functions that ends in the transmission of a response DTU to the server. In step 300, the end user device determines which program (or multimedia presentation) is currently being accessed. As noted above, this can be done by examining the data feed being received or by other methods known to those skilled in the art. For step 310, the program identification hformation of the program being accessed is then found. A database located in the end user device may be consulted or this program identification information may be embedded in the digital feed. Once the program identification information is found, a response DTU is created with the program identification information being part of the payload. Other data, depending on the implementation, may also be included in the payload. Details such as how long the program has been accessed, other programs accessed, and perhaps how long the end user device has been on, may be included. Once the response DTU is created, it can then be transmitted to the server (step 330).

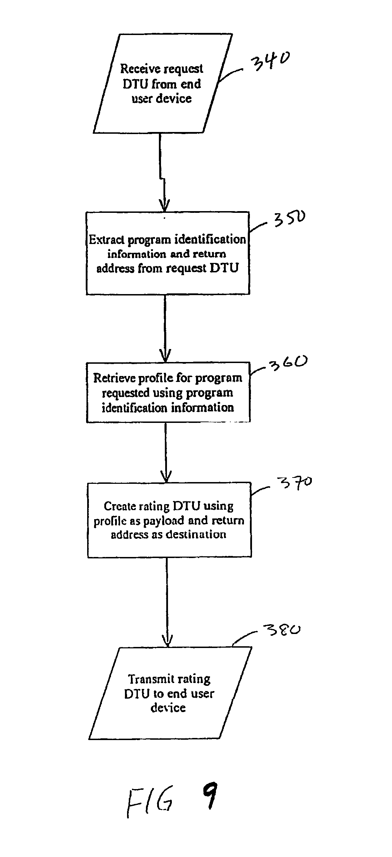

Figure 9 details the steps taken by a server when it receives a request DTU from an end user device requesting a profile and/or a ranking for a particular program. The process begins with the reception by the server of a request DTU from an end user device (step 340). The program identification information and the return address (the network address fo the requesting end user device) are then extracted from the request DTU (step 350). With the program identification information, the proper profile for the program may then be retrieved from the server's storage. As noted above, the contents of the profile may vary with the implementation. At the minimum, the latest ratings results for the program should be included to give the end user an indication of the popularity of the program. A synopsis or summary of the program may also be included in the profile along with whether the program is an original broadcast or not. Once the profile is retrieved, a ratings DTU can then be created with the profile as the payload and with the return address extracted from the request DTU as the destination address (step 370). The final step is that of transmitting the ratings DTU to the requesting end user device (step 380).

It should be noted that part of the above description describes an end user device as being for accessing multimedia presentations or programs. These programs are ideally television programs fed to the end user devices as digital video and audio feeds. However, any multimedia presentations may be used. Furthermore, the end user devices, while described generically, are ideally set top boxes (STBs) which are used to access television channels through conventional means such as cable, satellite, broadband cable, broadband wireless, and/or microwave means.

It should further be noted that while the above description describes a central server, multiple servers may be used with each sever serving a particular time zone or a particular geographical area. As such, a server for the Eastern Standard Time (EST) zone would provide profiles and polls for programs being shown in that time zone. Such a measure would avoid confusion as EST prime time programs may receive much lower ratings if query DTUs are sent to end user devices located in the Pacific Standard (PST) zone. Clearly, viewers in the PST zone will not be viewing the same programs at the same time as viewers in the EST zone. Furthermore, having servers which only service a specific geographical area will allow for regional and cultural differences between areas. As an example, a server which serves France will not be keeping track of programs which are showing in Italy. Thus, a server serving New York City will keep track of programs available in that locality while a server serving Albany, NY, will keep track of programs available in Albany.

While the above discussion specifically refers to the use of query DTUs and response DTUs, an alternative may be to eliminate query DTUs and configure the services to merely receive response DTUs and request DTUs and to send out ratings DTUs. Such configuration would use STBs that send response DTUs to the servers every time the channel is changed. This "real-time" information can therefore be reflected in the changing statistics for a specific channel. Clearly, however, a timer of some sort may need to be implemented in the STB so that an end user flipping through 15 channels in 10 seconds will not cause an inordinate amount of change in the statistics for the 15 channels. A predetermined "stabilization period", a time period during which the channel has not been changed and which indicates that the end user is actually viewing a program, may be implemented in the STB. This alternative eliminates the need for query DTUs but, for a large end user base, it may significantly increase not only the network traffic but the load on the server as well.

It should also be noted that while the above discussion refers to a sampling of the end users available to obtain the ratings, it is possible for the servers to receive data from all available end users. While this alternative may increase the network traffic going to and coming from the servers, it will provide a better indication of the end user preferences. Such an alternative will also allow the monitoring of specific data video feeds to flush out signal privacy. As an example, if there are only x subscribers and yet according to the statistics gathered there are x + y viewers, then there must be y viewers who are not legitimate. This alternative will also allow the targeted delivery of advertising to interested end users. An end user viewing a specific program is, more likely than not, interested in the subject matter of that program. As such, advertisers who have content that may be of interest to such end users can send such content to these end users. For example, end users watching a golf tournament (and these can be pinpointed by knowing which STBs are tuned to the golf tournament data stream) are more likely to be interested in golf related advertising. Golf related advertisers can therefore send such targeted advertising to these end users.

Embodiments of the invention may be implemented in any conventional computer programming language. For example, preferred embodiments may be implemented in a procedural programming language (e.g. "C") or an object oriented language (e.g. "C++"). Alternative embodiments of the invention may be implemented as pre-programmed hardware elements, other related components, or as a combination of hardware and software components.

Embodiments can be implemented as a computer program product for use with a computing or data processing system. Such implementation may include a series of computer instructions fixed either on a tangible medium, such as a computer readable medium (e.g., a diskette, CD-ROM, ROM, or fixed disk) or transmittable to a computer system, via a modem or other interface device, such as a communications adapter connected to a network over a medium. The medium may be either a tangible medium (e.g., optical or electrical communications lines) or a medium implemented with wireless techniques (e.g., microwave, infrared or other transmission techniques). The series of computer instructions embodies all or part of the functionality previously described herein. Those skilled in the art should appreciate that such computer instructions can be written in a number of programming languages for use with many computer architectures or operating systems. Furthermore, such instructions may be stored in any memory device, such as semiconductor, magnetic, optical or other memory devices, and may be transmitted using any communications technology, such as optical, infrared, microwave, or other transmission technologies. It is expected that such a computer program product may be distributed as a removable medium with accompanying printed or electronic documentation (e.g., shrink wrapped software), preloaded with a computer system (e.g., on system ROM or fixed disk), or distributed from a server over the network (e.g., the Internet or World Wide Web). Of course, some embodiments of the invention may be implemented as a combination of both software (e.g., a computer program product) and hardware. Still other embodiments of the invention may be implemented as entirely hardware, or entirely software (e.g., a computer program product).

Although various exemplary embodim ents of the invention have been disclosed, it should be apparent to those skilled in the art that various changes and modifications can be made which will achieve some of the advantages of the invention without departing from the true scope of the invention.

A person understanding this invention may now conceive of alternative structures and embodiments or variations of the above all of which are intended to fall within the scope of the invention as defined in the claims that follow.

## Claims

1. Method of gathering data associated with end user multimedia viewing preferences, the method comprising the steps of:
a) transmitting query data transmission units (DTUs) to a group of end user devices, each query DTU requesting viewing data related to a multimedia presentation currently being accessed by each one of said end user devices;
b) receiving response DTUs from said group of end user devices, each of said response DTUs containing said viewing data; and
c) organizing received viewing data such that each multimedia presentation currently active is assigned an indication relating to a popularity of said multimedia presentation,
said popularity being determined by using said viewing data.

2. Method according to claim 1 including the steps of:
d) receiving a request DTU from a requesting end user device requesting data relating to a specific multimedia presentation currently active; and
e) transmitting a rating DTU to said requesting end user device, said rating DTU containing said indication for said specific multimedia presentation.

3. Method according to claims 1 or 2 wherein said multimedia presentations are television programs.

4. Method according to any one of claims 1 to 3 wherein said group comprises end user devices randomly selected from a given pool of active end user devices coupled to a central server.

5. Method according to any one of claims 1 to 4 wherein all members of said group are located in a predetermined geographic area.

6. Method according to any one of claims 1 to 5 wherein each multimedia presentation is identified by program identification information.

7. Method according to any one of claims 1 to 6 wherein all members of said group are located in a specific time zone.

8. Method according to any one of claims 1 to 7 wherein said popularity is determine by using previously collected viewing data.

9. Method for retrieving data relating to a specific multimedia presentation from an online source, the method comprising:
a) transmitting a request DTU from an end user device to said online source, the request DTU requesting data relating to a specific multimedia presentation identified in said request DTU;
b) receiving a rating DTU from said online source, said rating DTU containing an indication relating to a popularity of said specific multimedia presentation; and
c) presenting said indication to an end user.

10. Method according to claim 9 wherein said end user is currently accessing said specific multimedia presentation.

11. Method according to claims 9 or 10 wherein said online source is a server.

12. Method according to any one of claims 9 to 11 wherein said end user device is a set top box (STB).

13. Method according to any one of claims 9 to 12 wherein said specific multimedia presentation is a television program.

14. Method according to claim 9 wherein said indication relates to a popularity of said specific multimedia presentation within a specific geographic area.

15. Method of providing end user multimedia viewing preferences to an online server from an end user device, the method comprising:
a) receiving a query DTU from said online server, said query DTU requesting viewing data related to a multimedia presentation currently being accessed by said end user device; and
b) transmitting a response DTU to said online server from said end user device, said response DTU containing data related to said multimedia presentation.

16. Method according to claim 15 wherein said multimedia presentation is identified by program identification program in said response DTU.

17. Method according to claims 15 or 16 wherein the end user device is a set top box (STB).

18. Method according to any one of claims 15 to 17 wherein said multimedia presentation is a television program.

19. Computer server for use in gathering data associated with end user multimedia viewing preferences, the server comprising:
- network connection means for connecting said server to a network;
- communication means for communicating with at least one end user device through said network connections means; and
- data collection means for receiving and processing data transmission units (DTUs) from said at least one end user device, said DTUs containing data related to a multimedia presentation being accessed by the or each of said at least one end user device.

20. Server according to claim 19 further including:
- data query means for querying said at least one end user device for said data.

21. Server according to claims 19 or 20 further including:
- data processing means for processing DTUs received from said at least one end user device such that each multimedia presentation referred to in the DTUs are assigned an indication relating to a popularity of said multimedia presentation.

22. Server according to any one of claims 19 to 21 further including:
- response means for responding to requests from end user devices requesting ratings information related to at least one multimedia presentation.

23. Server according to claims 21 or 22 wherein said server transmits said indication for each multimedia presentation for which an end user device requests ratings information.

24. User interface for use with an end user device which accesses multimedia presentations, the interface comprising:
- ratings indicia for presenting an indication of popularity of a specific multimedia presentation; and
- identification indicia for identifying said specific multimedia presentation.

25. Interface according to claim 24 further including synopsis means for presenting a synopsis of said specific multimedia presentation.

26. Interface according to claims 24 or 25 further including viewing means for presenting said specific multimedia presentation such that an end user can simultaneously view said specific multimedia presentation and said ratings indicia and said identification indicia.

27. Interface according to any one of claims 24 to 26 further including comparison means for comparing a popularity of said specific multimedia presentation with a popularity at least one other multimedia presentation.

28. End user device for accessing multimedia presentations, the device comprising:
- request means for transmitting a request DTU to an online source, said request data transmission unit (DTU) requesting data related to at least one active multimedia presentation;
- reception means for receiving a ratings DTU from said online source, said rating DTU containing said data related to at least one active multimedia presentation; and
- presentation means for presenting said data to an end user.

29. End user device according to claim 28 wherein said end user device is a set to box (STB).

30. End user device according to claims 28 or 29 wherein said presentation means presents said data to said end user through a video display unit (VDU).

31. End user device according to any one of claims 28 to 30 wherein said reception means includes a processing module for processing said ratings DTU to extract said data and for transmitting said data to said presentation means.

32. Computer readable media having encoded thereon computer readable code implementing a method of gathering data associated with end user multimedia viewing preferences, the method comprising the steps of:
a) transmitting query DTUs to a group of end user devices, each query DTU requesting viewing data related to a multimedia presentation currently being accessed by each one of said end user devices;
b) receiving response DTUs from said group of end user devices, each of said response DTUs containing said viewing data; and
c) organizing received viewing data such that each multimedia presentation currently active is assigned an indication relating to a popularity of said multimedia presentation,
said popularity being determined by using said viewing data.

33. Computer readable media according to claim 32 wherein said method includes the steps of:
d) receiving a request DTU from a requesting end user device requesting data relating to a specific multimedia presentation currently active; and
e) transmitting a rating DTU to said requesting end user device, said rating DTU containing said indication for said specific multimedia presentation.

34. Computer readable media having encoded thereon computer readable code implementing a method for retrieving data relating to a specific multimedia presentation from an online source, the method comprising:
a) transmitting a request DTU from an end user device to said online source, the request DTU requesting data relating to a specific multimedia presentation identified in said request DTU;
b) receiving a rating DTU from said online source, said rating DTU containing an indication relating to a popularity of said specific multimedia presentation; and
c) presenting said indication to and end user.

35. Computer readable media having encoded thereon computer readable code implementing a method of providing end user multimedia viewing preferences to an online server from an end user device, the method comprising:
a) receiving a query DTU from said online server, said query DTU requesting viewing data related to a multimedia presentation currently being accessed by said end user device; and
b) transmitting a response DTU to said online server from said end user device, said response DTU containing data related to said multimedia presentation.

36. Method of gathering data associated with end user multimedia viewing preferences, the method comprising the steps of:
a) receiving response data transmission units (DTUs) from a group of end user devices, each of said response DTUs containing viewing data related to a multimedia presentation currently being accessed by each one of said end user devices;
b) organizing received viewing data such that each multimedia presentation currently active is assigned an indication relating to a popularity of said multimedia presentation,
said popularity being determined by using said viewing data.

37. Method according to claim 36 including the steps of
a) receiving a request DTU from a requesting end user device requesting data relating to a specific multimedia presentation currently active; and
b) transmitting a rating DTU to said requesting end user device, said rating DTU containing said indication for said specific multimedia presentation.
